# FASCICULE DE BREVET EUROPEEN

(11) **EP 2 156 497 B1**
(45) Date de publication et mention de la délivrance du brevet: **30.11.2011**
(21) Numéro de dépôt: 08775683.9
(22) Date de dépôt: 06.03.2008
(51) Int. Cl.: H01M 8/10, H01M 8/02, H01M 8/06, H01M 4/92, C01B 3/00, C25B 11/04

(54) **MEMBRANE ECHANGEUSE PROTONIQUE ET CELLULE COMPORTANT UNE TELLE MEMBRANE**
PROTONENAUSTAUSCHMEMBRAN UND ZELLE MIT EINER SOLCHEN MEMBRAN
PROTON EXCHANGE MEMBRANE AND CELL COMPRISING SUCH A MEMBRANE

(30) Priorité: 28.05.2007 FR 0755287
(43) Date de publication de la demande: 24.02.2010
(73) Titulaire: Ceram Hyd, 77210 Avon (FR)
(72) Inventeur: MOFAKHAMI, Arash, F-77760 Buthiers (FR)
(74) Mandataire: Tanty, François
(86) Numéro de dépôt international: PCT/FR2008/050380
(87) Numéro de publication internationale: WO 2008/148956

(56) Documents cités:
- WO-A-00/45457
- WO-A-2006/003328
- US-A- 5 270 126
- US-A1- 2006 237 688

## Description

La présente invention concerne les membranes échangeuses protoniques et plus particulièrement, mais non exclusivement, celles utilisées dans les piles à combustible.

WO 2006/003328 divulgue l'utilisation d'une céramique de nitrure de bore pour réaliser une collision entre H⁺ et e⁻ et stocker de l'hydrogène.

La demande de brevet US 2004/0140201 rappelle qu'il est connu d'utiliser comme membrane échangeuse protonique dans des piles à combustible une résine perfluorosulfonique telle que celle commercialisée par la société DUPONT DE NEMOURS sous la marque « NAFION® ». Une telle résine présente certains inconvénients, notamment une capacité de fonctionnement limitée en température ainsi que la nécessité d'une présence d'eau. Cette demande antérieure suggère de remédier à ces inconvénients en utilisant des molécules de fullerènes.

Les publications US 6 864 011, EP 1 400 986, WO 02/41432 décrivent d'autres agencements de membranes échangeuses protoniques pour des piles à combustible.

Le brevet US 5 270 126 décrit une membrane comportant une poudre de nitrure de bore liée par une résine fluorée imprégnée d'acide phosphorique. Ce dernier participe à l'échange protonique.

La publication WO 00/45457 décrit des piles à combustible en couches minces avec systèmes MEMS et la publication US 2006/237688 un matériau composite pour le stockage d'hydrogène.

L'invention vise notamment à proposer une nouvelle membrane échangeuse protonique qui soit capable de permettre un fonctionnement à une température relativement élevée comme à température ambiante, sans nécessiter d'humidification du combustible ou de l'oxydant.

Selon un aspect de l'invention, la cellule de pile à combustible, électrolyseur ou accumulateur comporte :
- une anode,
- une cathode,
- entre la cathode et l'anode, une couche d'un matériau comportant du nitrure de bore activé, par exemple une céramique.

Il s'agit de préférence d'une couche de nitrure de bore hexagonal. La couche comporte du nitrure de bore pulvérulent contenu dans une matrice polymérique.

Une telle cellule présente l'avantage de pouvoir fonctionner à diverses températures sans présenter certains inconvénients rappelés plus haut des résines « NAFION^{®} ». Le matériau est de préférence imperméable à l'hydrogène. Ce caractère imperméable à l'hydrogène est par exemple obtenu en utilisant un matériau non poreux, c'est-à-dire dont la porosité est non détectable avec les appareils conventionnels de mesure de la porosité tels que le porosimètre à mercure. On peut encore utiliser un matériau ayant une porosité de surface relativement élevée, de manière à augmenter la surface d'échange, mais pas de porosité interne communiquant en totalité, de façon à former une barrière à la traversée par l'hydrogène de la membrane.

La cathode peut comporter au moins une couche d'un composé métallique au contact de la couche de nitrure de bore.

L'anode peut comporter au moins une couche d'un composé métallique au contact de la couche de nitrure de bore.

L'une ou les deux des électrodes, anode et/ou cathode, peut comporter l'un au moins des composés de la liste suivante, qui n'est pas limitative : platine, par exemple sous la forme de nanograins, nitrure de bore, notamment nitrure de bore activé comme mentionné ci-dessous, du charbon actif, un liant, par exemple de l'éthanol ou un composé polymère, par exemple du PVA ou du PTFE, ou encore un mélange de ces éléments.

L'anode peut par exemple comporter, une couche mince d'un mélange de RuO₂, IrO₂ ou de RuO₂, IrO₂ et TiO₂ ou de RuO₂, IrO₂ et SnO₂ doublé d'une plaque de titane poreuse (de 30% à 50% par exemple). La couche mince peut avoir une épaisseur comprise entre 5µm et 20µm, par exemple de 10 µm environ.

L'une ou l'autre des électrodes peut être réalisée sous une forme pulvérulente, étant pulvérisée sur la membrane constituée par la couche de nitrure de bore mentionnée ci-dessus. Après pulvérisation, cette couche peut être comprimée sous presse à une pression comprise entre 5 et 40 kg/m², par exemple d'environ 20kg/m², à une température comprise entre 15 °C et 200 °C, par exemple entre 25 °C à 150 °C, pour améliorer l'adhésion des électrodes à la membrane. La température dépend de la nature de la couche, selon par exemple qu'elle comporte ou non un polymère sensible à la température maximale appliquée.

L'épaisseur de la couche de nitrure de bore peut être inférieure ou égale à 2500 µm, mieux à 1000 µm, encore mieux à 500 µm, préférablement à 250 µm, mieux à 150 µm, par exemple entre 80 et 120 µm.

La cellule peut comporter un substrat de support de la membrane. Ce substrat peut contribuer à la tenue mécanique de la cellule et permettre l'utilisation d'une membrane relativement fine.

Le substrat peut être choisi par exemple parmi : alumine, zircone et nitrure de bore poreux et leurs mélanges.

Le substrat peut par exemple comporter un tissé fin, réalisé par exemple en Nylon^{®}, PolyEthylEtherKetone, Ethylène Tétrafluoréthylène, Polyéthylène téréphtalate ou Polyester.

Le matériau du substrat peut être inerte vis-à-vis des réactions électrochimiques ayant lieu dans la cellule.

Le substrat est perméable aux espèces chimiques devant atteindre la membrane, cette perméabilité étant avantageusement intrinsèque au matériau utilisé.

L'invention a encore pour objet, selon un autre de ses aspects, une pile à combustible comportant une cellule telle que définie plus haut, ainsi qu'un circuit d'amenée d'un combustible du côté de la cathode et un circuit d'amenée d'un oxydant du côté de l'anode.

Le combustible peut être de l'hydrogène gazeux ou d'autres gaz ou liquides.

L'oxydant peut être de l'air ou de l'oxygène.

La pile peut comporter un matériau dans lequel l'hydrogène destiné à alimenter la cellule est stocké sous forme d'hydrure. Ce matériau est par exemple choisi parmi les composés intermétalliques, notamment parmi les hydrures interstitiels ou métalliques complexes, par exemple choisis dans la liste suivante : de type AB₅ (A et B étant des métaux), par exemple LaNi₅, les phases de laves (Zr, Ti) (Mn, V, Cr, Ni)₂, par exemple ZrMn₂ ou TiMn₂, Mg, TiFe, Mg₂Ni, les solutions solides cubiques centrées à base de vanadium, BaReH₉ (la formule correspondant à l'état hydruré), Mg₂FeH₆ (la formule correspondant à l'état hydruré), NaAlH₄ (la formule correspondant à l'état hydruré), LiBH₄ (la formule correspondant à l'état hydruré), et tous leurs composés, dérivés ou leurs alliages.

La couche de matériau peut comporter une céramique, par exemple comportant du nitrure de bore hexagonal, de préférence activé par une solution acide sous champ électrique, du nitrure de lithium, du Nafion^{®} (Dupont de Nemours) de l'acide borique, un polymère conducteur ionique, par exemple du PVA. Elle peut être choisie parmi les céramiques échangeuses ioniques développées pour les piles PEMFC ou PCFC.

La couche de matériau peut par exemple comporter du nitrure de bore turbostratique, c'est-à-dire dont les plans de cristallisation peuvent être légèrement décalés par rapport à la position de cristallisation théorique, par exemple de cristallisation hexagonale du nitrure de bore, ce qui conduit à un moins bon maintien des plans entre eux, ces derniers étant plus écartés.

La couche de matériau peut comporter des grains de nitrure de bore hexagonal accolés entre eux, par exemple des grains d'une taille médiane supérieure à 1 nm, voire supérieure à 10 nm, voire supérieure à 5 µm, et inférieure à 20 µm, voire de l'ordre de 10 µm. Les grains peuvent eux-mêmes être composés de cristallites de taille moyenne comprise entre 0, 1 et 0,5 µm.

Les grains de nitrure de bore peuvent être orientés de préférence non tous parallèlement à la couche, mais par exemple perpendiculairement à celle-ci, de manière à assurer une meilleure tenue mécanique, ou encore de manière hétérogène, afin d'assurer une meilleure conduction protonique.

La couche de matériau peut comporter des grains de nitrure de bore percolés, par exemple maintenus solidaires les uns des autres par un composé, par exemple un composé de la liste suivante : nickel, oxyde de bore, borate de calcium, éthyle cellulose, acide borique, Polyvinyle alcool, Vinylcaprolactame, PTFE (Téflon^{®}), Poly éthyle sulfone sulfoné.

La couche de matériau peut être formée par du nitrure de bore inséré dans un liant, par exemple de l'acide borique ou une membrane polymère, ce qui peut assurer une très bonne conductivité protonique à la couche de céramique. Le polymère peut par exemple être du PVA (polyvinylalcool), Vinylcaprolactame, PTFE (Téflon^{®}), Polyéther sulfone sulfoné.

Le nitrure de bore peut se présenter sous la forme de grains, par exemple de dimension moyenne de l'ordre de 7 à 11 µm. La proportion massique du nitrure de bore dans le matériau peut être comprise entre 5 % et 100 % par exemple jusqu'à 70 %. La couche peut être entièrement faite de poudre de nitrure de bore fritté à haute pression. En variante, elle peut comporter le nitrure de bore et un liant, étant fabriquée par un procédé HIP (Hot Isostatic Pressure).

Le polymère, par exemple du PVA, peut être utilisé pour boucher les porosités présentes dans le nitrure de bore. L'ajout du polymère peut par exemple être effectué sous vide, de telle sorte que ce dernier est aspiré dans les porosités du nitrure de bore.

La couche de matériau peut notamment comporter l'un ou plusieurs des composés de la liste suivante, qui n'est pas limitative : composé inorganique, par exemple silice, par exemple sous forme d'aérocil^{®}, de silice amorphe pyrogénée, silice organique avec groupe thiol, silice avec fonction d'acide phosphonique, silice avec acide sulfonique ancré en surface, alumine, zircone, zircone sulfaté, oxyde de titane, oxyde de titane sulfoné, trioxyde de tungstène, trioxyde de tungstène hydraté, hétéropolyacide, par exemple polytriacétylène (PTA), polyacide méthacrylique (PTA), STA, SMA, acide tungstophosphorique (TPA), acide molybdophosphorique (MBA), sel d'acide tungstophosphorique de disodium (NA-TPA), acide phosphomolybdique (PMA), hétéropolyacide lacunaire H₈SiW₁₁O₃₉, hétéropolyacide sulfonique fonctionnalisé, PWA, acide silico-tungstique, PTA supporté sur SiO₂, ZrO₂ et TiO₂, hétéropolyacide chargé MCM-41, matériau mésoporeux de silicate de tungstène SI-MCM-41, hétéropolyacide chargé en Y-zéolyte, acide silico tungstique, phosphate de zircone, phosphate de zircone sulfophényle (ZRSPP), phosphate de zircone hydrogéné ZR (HPO₄)₂, tricarboxybutyl phosphonate de zircone, sulfophénylène phosphonate de zircone, Zr(HPO₄)₁₀ (O₃PC₆H₄SO₃H)₁₀, sulfophénylène phosphonate de phosphate de zircone, phosphate de zircone sulfonée, sel d'acide silico-tungstique de celsium, nanoparticules multicouches silicatées, par exemple montmorillonite, laponite, montmorillonite modifiée, par exemple montmorillonite sulfonée, MCM-41, montmorillonite organique (OMMT), montmorillonite greffée de sultones organiques et de sultones perfluorinées, phosphosilicates (P₂O₅-SiO₂), acide phosphato-antimonique, métaux nobles, par exemple platine, ruthénium, silicate de platine enrobé de Nafion^{®}, argent, zéolyte, chabasite et clinoptylolite, mordonite, phosphate, phosphate de calcium, hydroxyphosphate de calcium, phosphate de boron, composé organique, polymère, Nation^{®}, acide perfluorosulfonique, polysulfone sulfoné, PEO, PTFE, polyaniline, poly(vinylidène)fluoride-chlorotétrafluoroéthylène, PEG, DBSA, acide 4-dodécylbenzène sulfonique, SEBSS (styrène sulfoné, styrène-(éthylène-butylène) sulfoné), PVA, glutaraldéide, krytox, diphénylsilicate, diphényldiméthoxysilicate, poly(éthersulfone) sulfoné, PVDF, membrane Nafion^{®} NRE-212, Cs_{2,5} H_{0,5} PWO₄₀, PVDF-G-PSSA, polyvinylidène fluoride, polyacrylonitryl, acide dodéca-tungstophosphorique, (poly)étheréthercétone sulfoné (SPEEK), PVA, PEO, poly(arylèneéthersulfone) sulfoné, polyvinylalcool, PEEK (s-polyétheréthercétone), polyéthersulfone sulfoné cardo, oxyde de polyphénylène (PPO), polyéthylène glycol, nanoparticules de silice, tungstosilicate divacant [γ-SiW₁₀O₃₆]⁸⁻, PWA, PBI, PEG, polyéthylènimine (PEI), poly(arylèneéthersulfone) disulfoné, Téflon^{®}, divynilbenzène (DVB réticulé) sulfoné, poly(éthylène-alt-tétrafluroroéthylène) greffée de polystyrène, poly(vinyldifluoride), polybenzimide azole, PVDF, poly(étheréthercétone) sulfoné cardo, poly(arylèneéther fluoré)S, Nafion^{®} 115, polyimide, polyamidimide (PAI), polyvinylidène fluoride (PVDF), styrène-éthylène-butylène-styrène élastomère (SEVS), polyte (biphényl éther sulfone sulfoné), polytétrafluoroéthylène (PTFE), PBI.

La couche de nitrure de bore peut être obtenue par le procédé suivant.

Des grains de nitrure de bore sont mélangés à un liant polymère sous forme liquide, ce mélange étant coulé sur un substrat, puis chauffé à une température suffisante de manière à provoquer la calcination du liant, par exemple à une température de l'ordre de 600 ou 700°C, de sorte que les grains de nitrure de bore sont percolés entre eux sur le substrat.

Dans une étape supplémentaire, le résultat obtenu est chauffé à une température comprise entre 800 et 1700°C, voire entre 1000 et 1500°C sous une atmosphère neutre, par exemple d'azote ou d'argon, provoquant le frittage des grains entre eux.

Enfin, dans une étape supplémentaire, on enlève le substrat et on obtient une membrane rigide de nitrure de bore composée de grains frittés.

Dans ce qui précède, le nitrure de bord peut avoir été activé au préalable ou être activé au cours du ou en fin de procédé de fabrication de la couche de céramique.

Par activation du nitrure de bore, on entend un procédé permettant de favoriser la conduction protonique dans le nitrure de bore.

Le nitrure de bore peut par exemple être activé dans une solution acide en étant soumis à un champ électrique.

Le nitrure de bore peut encore être activé dans une solution de soude, avec ou sans application d'un champ électrique.

Dans un autre procédé encore, le nitrure de bore peut être activé en étant trempé dans une solution, par exemple d'eau, en présence de fer, par exemple une grille de fer, et sous application d'un champ électrique.

L'utilisation de nitrure de bore sous forme pulvérulente peut faciliter l'activation de ce dernier.

Le nitrure de bore peut être activé sous sa forme pulvérulente avant insertion dans un liant, par exemple dans un polymère, ou encore après insertion dans ce liant, par exemple en fonction du liant utilisé.

Dans le procédé décrit ci-dessus, les grains de nitrure de bore peuvent être activés avant leur insertion dans le liant polymère ou après le frittage des grains.

En cas de frittage, l'activation peut être effectuée en fin de procédé, pour éviter le risque qu'elle ne soit détruite par le frittage.

L'invention a encore pour objet, selon un autre de ses aspects, un procédé de fabrication d'une cellule telle que définie plus haut, comportant l'étape suivante :
- activer une couche d'un matériau, par exemple une céramique, comportant du nitrure de bore en exposant celle-ci à un acide.

Dans une étape supplémentaire, on peut :
- déposer sur au moins une face de la couche de nitrure de bore une couche d'un catalyseur d'électrode.

Le catalyseur peut être une couche d'au moins un composé métallique, par exemple le platine, nickel, ou du graphite platine ou graphite nickel.

La couche de nitrure de bore peut être métallisée avant activation.

L'activation peut avoir lieu en présence d'un champ électrique.

L'invention a encore pour objet, selon un autre de ses aspects, un procédé de fabrication d'une telle membrane, pour des applications pile à combustible ou autres, notamment électrolyseur ou accumulateur, dans lequel la membrane est exposée à une solution acide puis rincée.

L'exposition de la membrane à l'acide peut avantageusement être effectuée sous un champ électrique, ce qui peut améliorer l'efficacité de l'activation. Le champ électrique peut par exemple être compris entre 15 et 40000 V/m, voire d'au moins 25 V/m, voire de l'ordre de 15000 V/m. Un champ de 15000 V/m équivaut à appliquer 1,5 V pour une épaisseur de membrane de 100µm ou encore 15 V pour une épaisseur de 1 mm.

L'invention a encore pour objet un procédé d'activation d'une membrane telle que définie plus haut, comportant l'étape suivante : exposer le nitrure de bore à une solution permettant de fournir des radicaux hydroxyles -OH et de créer dans le nitrure de bore des liaisons B-OH, ou bien des ions H₃O⁺ permettant de créer dans le nitrure de bore des liaisons NH₂ et des liaisons B-OH.

L'invention a encore pour objet, selon un autre de ses aspects, une membrane échangeuse protonique pour un dispositif électrochimique, notamment une pile à combustible, un électrolyseur ou un accumulateur, comportant une couche d'un matériau, par exemple une céramique, de nitrure de bore hexagonal activé.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique d'une cellule de pile à combustible réalisée conformément à l'invention,
- la figure 2 est une vue schématique d'une membrane échangeuse protonique pour réaliser une membrane d'électrolyseur, et
- la figure 3 est une vue schématique d'une membrane échangeuse protonique pour réaliser un accumulateur.

Sur le dessin, les proportions relatives des divers éléments n'ont pas toujours été respectées, dans un souci de clarté.

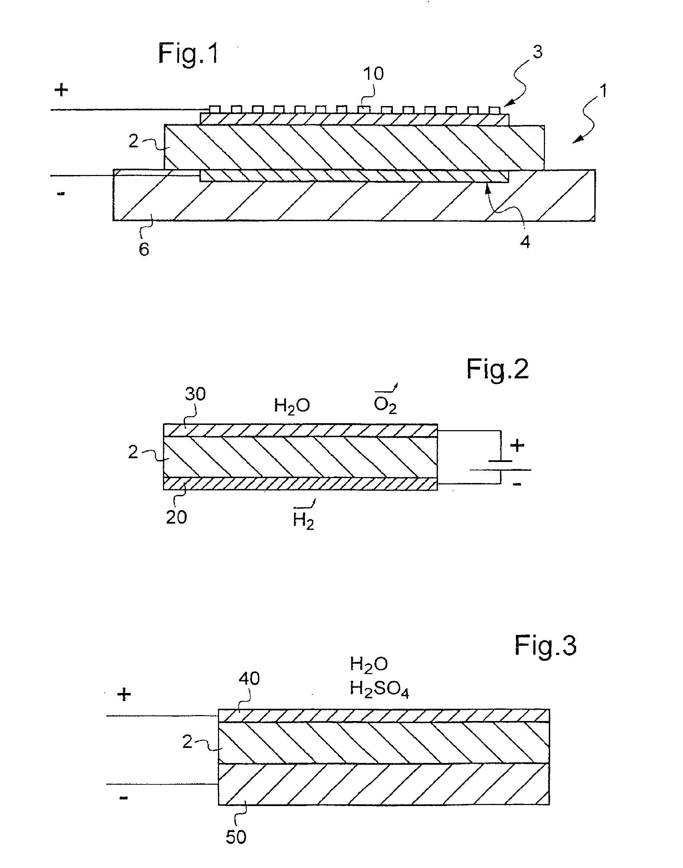

On a représenté à la figure 1 une cellule 1 de pile à combustible comportant une membrane échangeuse protonique 2 formée d'une céramique de nitrure de bore hexagonal activé h-BN.

La cellule 1 comporte une anode 3 d'un côté de la membrane échangeuse protonique 2 et une cathode 4 de l'autre côté de celle-ci.

L'anode comporte par exemple une couche servant à la réaction d'oxydation, d'un composé métallique tel que le platine ou l'or, ou composite tel que le graphite platine ou le graphite nickel, et la cathode une couche d'un catalyseur pour le combustible, par exemple une couche de platine, de nickel, de graphite nickel ou de graphite platine, chaque couche pouvant être au contact de la membrane 2.

La membrane échangeuse protonique 2 ainsi que les deux couches disposées de part et d'autre de celle-ci peuvent être supportées par un substrat 6 poreux et inerte, tel que par exemple une couche d'alumine, de zircone ou de nitrure de bore poreuse.

Des conducteurs électriques peuvent contacter l'anode et la cathode.

L'anode 3 peut par exemple comporter sur la couche servant à la réaction d'oxydation un dépôt d'or, par exemple sous la forme d'une trame 10, afin de récolter le courant électrique.

L'épaisseur de la membrane échangeuse 2 est par exemple de 100 µm et celle des couches servant à la réaction d'oxydation et de catalyseur va par exemple de 10 à 30 µm.

Dans un exemple de mise en oeuvre de l'invention, la membrane échangeuse protonique 2 est réalisée à partir d'une céramique de nitrure de bore h-BN de référence HIP de la société SAINT-GOBAIN, activée par exposition à un acide, par exemple de l'acide sulfurique, par exemple pendant plusieurs heures avec de l'acide sulfurique par exemple de concentration 0,1 M à 5M, par exemple 5M. Lors de cette exposition, la membrane peut, le cas échéant, être exposée à un champ électrique d'environ 30 000 V/m, c'est-à-dire à une tension de 30 V lorsque l'épaisseur de la membrane est de 1 µm, ce qui peut améliorer la qualité de l'activation. La céramique est rincée après exposition à l'acide. Sans être lié par une théorie, l'activation peut permettre de modifier les liaisons pendantes des grains du nitrure de bore.

Lorsque la membrane est activée en présence d'un champ électrique, ce champ électrique peut être généré entre deux électrodes. L'anode peut être ou non au contact de la membrane et est au contact de l'électrolyte acide et eau. La cathode doit être au contact seulement de la membrane, et non au contact de l'acide.

Il peut s'agir d'électrodes ne servant qu'au processus d'activation et non utiles par la suite, ne se retrouvant par exemple pas dans le système utilisant la membrane. Il peut s'agir aussi d'électrodes dont l'une au moins se retrouve dans le système final.

Au moins l'une des électrodes servant à l'activation, voire les deux, peuvent être au contact de la membrane et être par exemple fixée de manière permanente à celle-ci. L'une des électrodes servant à l'activation est par exemple une anode en platine, d'autre éléments conducteurs électriques pouvant être utilisés sous réserve qu'ils ne s'oxydent pas ni ne se dégradent rapidement.

L'anode peut encore être en platine poreux si celui-ci est au contact de la membrane. L'autre électrode, poreuse aussi, est une cathode en n'importe quel matériau conducteur électrique. Ces électrodes peuvent être plaquées, par exemple par des procédés de dépôt en couches fines, contre la membrane.

Dans une variante, on dépose de part et d'autre de la couche de nitrure de bore des couches conductrices électriques, par exemple des couches de platine poreux. On expose ensuite la membrane ainsi revêtue à l'acide pour l'activer, en présence d'un champ électrique appliqué grâce aux couches conductrices.

Une fois l'exposition à l'acide effectuée, la membrane peut être rincée et séchée.

Bien entendu, on ne sort pas du cadre de la présente invention en apportant des modifications aux exemples qui viennent d'être donnés ci-dessus.

On peut notamment ne revêtir de platine, nickel ou d'un alliage de ces deux métaux, la membrane échangeuse que sur l'anode. L'autre face correspondant à la cathode est par exemple rendue conductrice par dépôt d'un métal tel qu'une laque de cuivre ou d'argent.

La membrane échangeuse protonique peut présenter diverses formes, par exemple une forme plane ou cylindrique.

Dans l'exemple de la figure 2, la membrane échangeuse protonique 2 est utilisée au sein d'un électrolyseur comportant une cathode métallique 20, par exemple en platine ou d'autres conducteurs électriques, l'anode 30 étant par exemple en platine également.

Dans l'exemple de la figure 3, la membrane échangeuse 2 est utilisée au sein d'un accumulateur, l'anode 40 étant par exemple réalisée en platine ou nickel et au contact d'un électrolyte aqueux acide, par exemple une solution d'acide sulfurique, tandis que la cathode 50 comporte un matériau hydrurable.

L'expression « comportant un » doit être comprise comme étant synonyme de « comportant au moins un ».

## Revendications

1. Cellule (1) de pile à combustible, électrolyseur ou accumulateur, comportant :
- une anode (3),
- une cathode (4),
**caractérisée par le fait qu'**elle comporte, entre la cathode et l'anode, une couche (2) d'un matériau comportant du nitrure de bore activé, la couche comportant du nitrure de bore pulvérulent contenu dans une matrice polymérique.

2. Cellule selon la revendication précédente, le matériau étant imperméable à l'hydrogène.

3. Cellule selon l'une quelconque des revendications précédentes, la cathode (4) comportant au moins une couche d'un composé métallique au contact de la couche de nitrure de bore.

4. Cellule selon l'une quelconque des revendications précédentes, l'anode comportant au moins une couche d'un composé métallique au contact de la couche de nitrure de bore.

5. Pile à combustible comportant une cellule (1) telle que définie dans l'une quelconque des revendications précédentes, ainsi qu'un circuit d'amenée d'un combustible du côté de la cathode et un circuit d'amenée d'un oxydant du côté de l'anode.

6. Pile selon la revendication précédente, le combustible étant de l'hydrogène gazeux.

7. Pile selon l'une quelconque des revendications 5 ou 6, comportant un matériau dans lequel l'hydrogène destiné à alimenter la cellule est stocké sous forme d'hydrure.

8. Electrolyseur comportant une cellule telle que définie dans l'une quelconque des revendications 1 à 4.

9. Procédé de fabrication d'une cellule (1) telle que définie dans l'une quelconque des revendications 1 à 4, comportant l'étape suivante :
- activer une couche d'un matériau comportant du nitrure de bore en exposant celle-ci à un acide.

10. Procédé selon la revendication précédente, comportant en outre l'étape suivante :
- déposer sur au moins une face de la couche de nitrure de bore une couche d'un catalyseur d'électrode.

11. Procédé selon la revendication précédente, la couche de nitrure de bore étant métallisée avant activation.

12. Procédé de fabrication d'une membrane en matériau comportant du nitrure de bore hexagonal activé, dans lequel la membrane est exposée à une solution acide puis rincée.

13. Procédé d'activation d'une membrane échangeuse protonique (2) de pile à combustible, électrolyseur ou accumulateur, comportant une couche d'un matériau comportant du nitrure de bore hexagonal activé, comportant l'étape suivante: exposer le nitrure de bore à une solution permettant de fournir des radicaux hydroxyles -OH et de créer dans le nitrure de bore des liaisons B-OH.

## Claims

1. A cell (1) for a fuel cell, electrolyzer or accumulator, comprising:
- an anode (3),
- a cathode (4),
**characterized by** the fact that it comprises, between the cathode and the anode, a layer (2) of a material comprising activated boron nitride, the layer comprising powdery boron nitride contained in a polymeric matrix.

2. The cell according to the preceding claim, the material being impervious to hydrogen.

3. The cell according to any preceding claim, the cathode (4) comprising at least one layer of a metal compound in contact with the boron nitride layer.

4. The cell according to any preceding claim, the anode comprising at least one layer of a metal compound in contact with the boron nitride layer.

5. A fuel cell including a cell (1) as defined in any preceding claim, well as a fuel feeding circuit on the side of the cathode and an oxidizer feeding circuit on the side of the anode.

6. The fuel cell according to the preceding claim, the fuel being hydrogen gas.

7. The fuel cell according to any one of claims 5 or 6, comprising a material in which the hydrogen intended to feed the cell is stored as a hydride.

8. An electrolyzer comprising a cell defined in any one of claims 1 to 4.

9. A method for making a cell (1) as defined in any one of claims 1 to 4, comprising the following step:
- activating a layer of material comprising boron nitride by exposing the latter to an acid.

10. The method according to the preceding claim, further comprising the following step:
- depositing a layer of an electrode catalyst on at least one face of the boron nitride layer.

11. The method according to the preceding claim, the boron nitride layer being metallized before activation.

12. A method for making a membrane in a material comprising activated hexagonal boron nitride, wherein the membrane is exposed to an acid solution and then rinsed.

13. A method for activating a proton exchange membrane (2) of a fuel cell, electrolyzer or accumulator, comprising a layer of a material comprising activated hexagonal boron nitride, comprising the following step: exposing the boron nitride to a solution with which hydroxyl radicals -OH may be provided and B-OH bonds may be created in the boron nitride.

## Patentansprüche

1. Brennstoff-, Elektrolyse- oder Akkumulatorzelle (1) mit:
- einer Anode (3),
- einer Kathode (4),
**dadurch gekennzeichnet, dass** sie zwischen der Kathode und der Anode eine Schicht (2) aus einem Material aufweist, das aktiviertes Bornitrid enthält, wobei die Schicht pulverförmiges Bornitrid enthält, das in einer polymeren Matrix enthalten ist.

2. Zelle nach dem vorstehenden Anspruch, bei der das Material für Wasserstoff undurchlässig ist.

3. Zelle nach einem der vorstehenden Ansprüche, bei der die Kathode (4) wenigstens eine Schicht aus einer Metallzusammensetzung ausweist, die mit der Schicht aus Bornitrid in Kontakt steht.

4. Zelle nach einem der vorstehenden Ansprüche, bei der die Anode wenigstens eine Schicht aus einer Metallzusammensetzung aufweist, die mit der Schicht aus Bornitrid in Kontakt steht.

5. Brennstoffzelle mit einer Zelle (1) nach einem der vorstehenden Ansprüche und mit einer Zufuhrleitung für einen Brennstoff auf der Seite der Kathode und einer Zufuhrleitung für ein Oxidationsmittel auf der Seite der Anode.

6. Brennstoffzelle nach dem vorstehenden Anspruch, bei der der Brennstoff Wasserstoffgas ist.

7. Brennstoffzelle nach Anspruch 5 oder 6, die ein Material enthält, in dem der zum Betrieb der Zelle bestimmte Wasserstoff in der Form eines Hydrids gespeichert ist.

8. Elektrolysegerät mit einer Zelle nach einem der Ansprüche 1 bis 4.

9. Verfahren zur Herstellung einer Zelle (1) nach einem der Ansprüche 1 bis 4, mit dem folgenden Schritt:
- Aktivieren einer Schicht aus einem Material, das Bornitrid enthält, indem dieses einer Säure ausgesetzt wird.

10. Verfahren nach dem vorstehenden Anspruch, das außerdem den folgenden Schritt aufweist:
- Aufbringen schicht eines Elektrodenkatalysators auf wenigstens eine Oberfläche der Schicht aus Bornitrid.

11. Verfahren nach dem vorstehenden Anspruch, bei dem die Schicht aus Bornitrid vor der Aktivierung metallisiert wird.

12. Verfahren zur Herstellung einer Membran aus einem Material, das aktiviertes hexagonales Bornitrid enthält, bei welchem Verfahren die Membran einer sauren Lösung ausgesetzt und dann gespült wird.

13. Verfahren zur Aktivierung einer Protonenaustauschmembran (2) einer Brennstoff-, Elektrolyse- oder Akkumulatorzelle, die eine Schicht aus einem Material aufweist, das aktiviertes hexagonales Bornitrid enthält, mit dem folgenden Schritt: Behandeln des Bomitrids mit einer Lösung, die es erlaubt, Hydroxylradikale -OH zu liefern und B-OH-Bindungen in dem Bornitrid zu erzeugen.
